Europäisches Patentamt

European Patent Office

Office européen des brevets

(11) Veröffentlichungsnummer: **0 418 772 A2**

(12) **EUROPÄISCHE PATENTANMELDUNG**

(21) Anmeldenummer: 90117827.7

(51) Int. Cl.⁵: **B32B 3/24**

(22) Anmeldetag: 17.09.90

(30) Priorität: 21.09.89 DE 3931452

(43) Veröffentlichungstag der Anmeldung:
27.03.91 Patentblatt 91/13

(84) Benannte Vertragsstaaten:
AT BE CH DE FR GB IT LI LU NL SE

(71) Anmelder: HOECHST AKTIENGESELLSCHAFT
Postfach 80 03 20
W-6230 Frankfurt am Main 80(DE)

(72) Erfinder: Dinter, Peter, Dipl.-Ing.
Am Wiesenberg 4
W-6227 Hallgarten(DE)
Erfinder: Spross, Bernd
Drosselweg 2a
W-6224 Taunusstein 2(DE)

(54) Dimensionsstabiler Verbundkörper und Verfahren zu seiner Herstellung.

(57) Ein dimensionsstabiler Verbundkörper 1 besitzt die Gestalt einer ebenen Platte, eines Rohres oder einer nicht ebenen Raumform und besteht aus einer Anzahl übereinander geschichteter, miteinander verpreßter, thermoplastischer Kunststoffolien 4, 4', die biaxial oder monoaxial verstreckt sind. Die einzelne Kunststoffolie ist zumindest einseitig, im allgemeinen jedoch an beiden Seiten, mit Siegelschichten 5 bzw. 5' beschichtet, deren Schmelzpunkt niedriger als der Schmelzpunkt jeder der Kunststoffolien ist. In dem Verbundkörper 1 ist eine mit offenen Querschnitten 7 ausgestattete Verstärkungsschicht 3 eingebettet, die allseitig von dem siegelfähigen Polymer der Siegelschichten eingeschlossen ist. Das Polymer füllt die offenen Querschnitte der Verstärkungsschicht 3 von beiden Seiten her aus und bildet einen nicht trennbaren Verbund mit der Verstärkungsschicht 3, die nach dem thermischen Verpressen in einer Polymermatrix 2 des Verbundkörpers eingelagert ist.

## DIMENSIONSSTABILER VERBUNDKÖRPER UND VERFAHREN ZU SEINER HERSTELLUNG

Die Erfindung betrifft einen dimensionsstabilen Verbundkörper in Gestalt einer ebenen Platte, eines Rohres oder einer nicht ebenen Raumform, aus einer Anzahl übereinander geschichteter, miteinander verpreßter, thermoplastischer Kunststoffolien, die zumindest einseitig mit einer Siegelschicht beschichtet sind, deren Schmelzpunkt niedriger als der Schmelzpunkt jeder der Kunststoffolien ist und die mono- und/oder biaxial verstreckt sind, und ein Verfahren zu seiner Herstellung.

In den letzten Jahren ist seitens verschiedener Branchen, wie z.B. dem Fahrzeugbau, Flugzeugbau, Apparatebau, ein verstärkter Trend zum Einsatz von Hochleistungsverbundwerkstoffen zu beobachten. Hierunter einzuordnen sind u.a. duroplastische und thermoplastische Polymerwerkstoffe, deren mechanische Eigenschaften durch Einarbeitung von Verstärkungsmaterialien in Form von Textil-, Glas-, Kohlenstoff- oder Aramidfasern um ein Vielfaches gegenüber dem unverstärkten Polymeren verbessert werden.

Alternativ zu dem Einarbeiten von Verstärkungsmaterialien wurden Techniken entwickelt, hochfeste Kunststoffplatten durch Orientierungsprozesse herzustellen. Als eine Technik im Rahmen der Orientierungsprozesse kann das in der EP-A1 - 0 207 047 beschriebene Verfahren gelten, bei dem eine Vielzahl biaxial verstreckter, mit dünnen koextrudierten Siegelschichten ausgerüsteter Folien zu einer dicken, homogenen Platte unter Druck und Temperatur verpreßt werden.

Eine verfahrensspezifische Maßnahme dieser Technik, nämlich die Verwendung einzelner Folienlagen, ermöglicht den gezielten Einbau von Funktionsschichten an beliebiger Stelle des Formkörpers und damit die Maßschneiderei von Eigenschaften des fertigen Formkörpers. So können beispielsweise biaxial verstreckte Folien mit monoaxial oder unverstreckten artgleichen oder artfremden Folien kombiniert werden, um das bruchmechanische Verhalten des Formkörpers in gewünschter Weise zu beeinflussen. Die auf diese Weise erzielten Produkteigenschaften reichen vielfach aber nicht aus, um den extremen mechanischen Anforderungen hochbeanspruchter Materialien in der Praxis gerecht zu werden.

In der AT-PS 383 542 ist ein steifer Formkörper, wie eine Platte oder ein Rohr, aus einer Vielzahl übereinander und/oder nebeneinander geschichteter und miteinander verpreßter, orientierter, d.h. verstreckter, thermoplastischer Kunststoffträger in Folien-, Bändchen-, Monofil- oder Faserform beschrieben. Die verstreckten Kunststoffträger an den beim Über- und/oder Nebeneinanderschichten zur Anlage gelangenden Seiten sind mit thermoplastischem Kunststoff beschichtet, wobei das Beschichtungsmaterial eine niedrigere Kristallitschmelztemperatur aufweist als die Kunststoffträger und die Dicke von je zwei aneinanderliegenden Beschichtungsma terialien geringer ist als die Dicke eines Kunststoffträgers.

Das in der österreichischen Patentschrift AT-PS 383 542 vorgeschlagene Verfahren liefert hochfeste, mechanisch stabile Platten durch Druckanwendung auf verstreckte, koextrudierte dünne Kunststoffolien, unter Einwirkung von Wärme, wobei die an den gegenseitigen Berührungsflächen mit thermoplastischem Kunststoff beschichteten Kunststoffträger bei einer Temperatur oberhalb der Kristallitschmelztemperatur des Beschichtungsmaterials und unterhalb der Kristallitschmelztemperatur des Kunststoffträgers verpreßt werden. Dieses Verfahren bietet von seinem Grundprinzip her gegenüber alternativen Plattenherstelltechnologien, wie z.B. Extrusion, Gießen und Kalandrieren, die Möglichkeit, durch Verpressen bei erhöhter Temperatur einen nennenswerten Abfall der durch das Verstrecken eines einzelnen Kunststoffträgers erzielten günstigen mechanischen und physikalischen Eigenschaften zu verhindern, so daß der Formkörpers trotz seiner größeren, die Abmessungen des einzelnen Kunststoffträgers wesentlich überschreitenden Dimensionen näherungsweise die mechanischen und technologischen Eigenschaften eines einzelnen verstreckten Kunststoffträgers aufweist. Da ein Folienstapel aus einzelnen, gleichartigen oder unterschiedlichen Folien beliebig geschichtet und gepreßt wird, können einerseits über die Art und den Aufbau der verwendeten Folien gezielte Funktionsschichten entweder auf die Oberfläche der Platte aufgebracht oder in Form von Zwischenschichten in die Platte eingefügt werden, und andererseits durch die Auswahl geeigneter Preßmatrizen gleichzeitig entsprechende Oberflächenstrukturierungen geschaffen werden.

Aufgabe der vorliegenden Erfindung ist es, einen hochfesten dimensionsstabilen Verbundkörper der eingangs beschriebenen Art als ebenen, sphärisch geformten oder zylindrischen bzw. rohrförmigen Formkörper weiterzuentwickeln und dessen mechanische Festigkeit so zu erhöhen, daß der Formkörper als Konstruktionshalbzeug eingesetzt werden kann.

Diese Aufgabe wird erfindungsgemäß dadurch gelöst, daß zumindest eine mit offenen Querschnitten ausgestattete Verstärkungsschicht in dem Verbundkörper eingebettet und allseitig von einem siegelfähigen Polymer eingeschlossen ist und daß das Polymer die offenen Querschnitte der Verstärkungsschicht von beiden Seiten her ausfüllt und einen nicht trennbaren Verbund mit der Verstärkungsschicht bildet.

In Weiterbildung der Erfindung grenzt je eine Siegelschicht aus dem siegelfähigen Polymer an die Verstärkungsschicht an jeder Seite an, sind die offenen Querschnitte der Verstärkungsschicht Poren und füllt das Polymer der Siegelschichten von beiden Seiten her die Poren der Verstärkungsschicht aus und ist untrennbar untereinander und mit der Verstärkungsschicht verbunden.

In Ausgestaltung der Erfindung ist die einzelne Verstärkungsschicht mittig in dem Verbundkörper eingebettet und umschließt jede der beiden, sich teilweise berührenden Siegelschichten, die auf zueinander benachbarten Kunststoffolien aufgebracht sind, die Verstärkungsschicht entlang ihrer Oberflächenstruktur.

Die weitere Ausgestaltung der Erfindung ergibt sich aus den Patentansprüchen 4 bis 17.

Das Verfahren zur Herstellung eines Verbundkörpers durch Verpressen eines Folienstapels aus übereinander geschichteten, biaxial und/oder monoaxial verstreckten, thermoplastischen, koextrudierten Kunststoffolien zeichnet sich dadurch aus, daß vor dem Verpressen in den Folienstapel an beliebiger Stelle zumindest eine Verstärkungsschicht in Form von Faserfilamenten, eines Geleges, Gewebes, Gewirkes, Gestrickes oder Vlieses so eingelegt wird, daß sie innerhalb der Begrenzungskanten der Zuschnitte der Kunststoffolien liegt, daß anschließend eine thermische Verpressung zwischen zwei Preßmatrizen, die wahlweise glatte und/oder strukturierte Oberflächen aufweisen, vorgenommen wird, und daß die in den Schmelzzustand überführten Siegelschichten auf den Kunststoffolien sowohl die Verstärkungsschicht allseitig einhüllen als auch deren freie Querschnitte bzw. Poren ausfüllen, so daß nach dem Abkühlen des Folienstapel ein untrennbarer Verbundkörper aus Kunststofffolien, Siegelschichten und Verstärkerschicht vorliegt.

Zur Herstellung des Verbundkörpers wird bevorzugterweise auf Folien aus Polypropylen und Polyester zurückgegriffen, jedoch sind andere geeignete Polymerwerkstoffe bzw. Polymerkombinationen keineswegs von der Verwendung ausgeschlossen. Polypropylen- und Polyesterfolien zeichnen sich durch niedrige Herstellungskosten aus und weisen darüber hinaus eine hohe mechanische Festigkeit auf, wenn sie biaxial oder monoaxial verstreckt sind. Ein derartiger, durch Verpressen eines solchen Folienstapels hergestellter Verbundkörper, der aus einer Vielzahl in gleicher oder unterschiedlicher Richtung geschichteter, biaxial verstreckter, mit äußeren Siegelschichten ausgerüsteter Kunststoffolien sowie mindestens einer dazwischen eingelagerten Verstärkungsschicht besteht, die aus Textil-, Glas-, Kohlenstoff-, Aramidfasern oder Fasern aus flüssigkristallinen Polymeren oder Flächengebilden aus den Fasern in Gestalt von Gelegen, Geweben, Gestricken, Gewirken oder Vlies, besteht, bildet ein preiswertes hochfestes Konstruktionshalbzeug.

Die Erfindung wird im folgenden anhand von zeichnerisch dargestellten Ausführungsbeispielen näher erläutert. Es zeigen:

Fig. 1 eine schematische Schnittansicht einer ersten Ausführungsform eines ebenen, plattenförmigen Verbundkörpers nach der Erfindung,

Fig. 2 eine schematische Schnittansicht einer zweiten Ausführungsform eines ebenen, plattenförmigen Verbundkörpers, mit einer dickeren Verstärkungsschicht als die erste Ausführungsform nach Figur 1,

Fig. 3 eine schematische Schnittansicht einer dritten Ausführungsform eines ebenen, plattenförmigen Verbundkörpers, mit einer Verstärkungsschicht, die in einer Siegelschichtfolie vollständig eingelagert ist,

Fig. 4 eine schematische Schnittansicht einer vierten Ausführungsform eines gekrümmten, plattenförmigen Verbundkörpers mit mehreren Verstärkungsschichten,

Fig. 5 eine schematische Schnittansicht einer fünften Ausführungsform eines ebenen, plattenförmigen Verbundkörpers mit mehreren Verstärkungsschichten, die sich nur über Teilflächen im Inneren des Verbundkörpers erstrecken,

Fig. 6 eine Draufsicht auf einen Ausschnitt einer einzelnen Verstärkungsschicht, die aus einem Fasergewebe besteht,

und

Fig. 7 einen Schnitt durch einen rohrförmigen Verbundkörper nach der Erfindung.

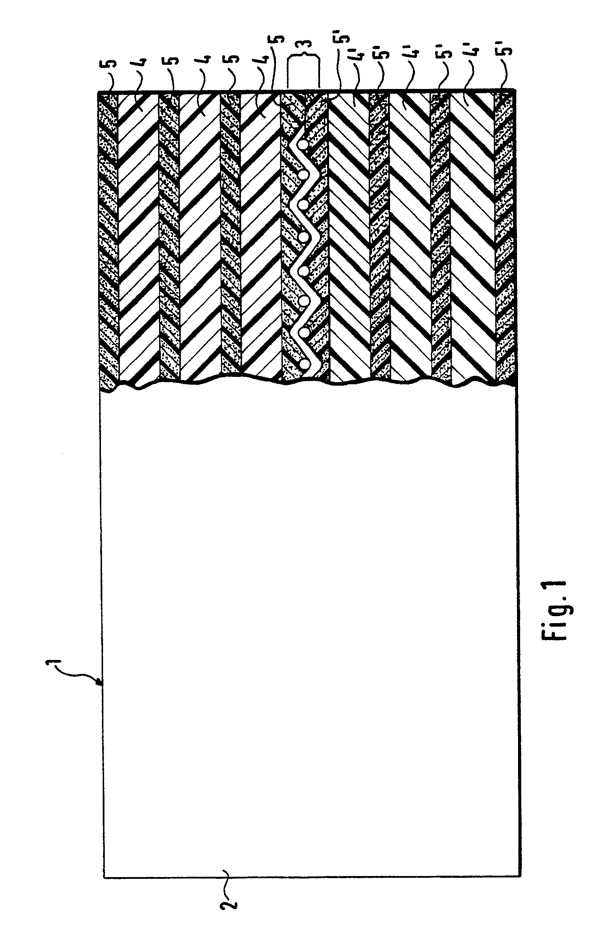

Eine erste Ausführungsform eines ebenen, plattenförmi gen Verbundkörpers 1 ist in Figur 1 dargestellt und besteht aus einer Polymermatrix 2, in der mittig eine Verstärkungsschicht 3 eingelagert ist. Die Polymermatrix 2 besteht aus einem siegelfähigen Polymer, das allseitig die Verstärkungsschicht 3 einschließt, die beispielsweise aus einem Fasergewebe besteht, von dem aus Gründen der besseren Übersichtlichkeit im Schnitt nur ein Kett- und ein Webfaden gezeigt sind. Die Polymermatrix 2 wird durch einen Stapel von Kunststoffolien 4, 4$'$ durch Verpressen bei einer vorgegebenen Temperatur hergestellt. Wie aus dem Vergrößerungsausschnitt in Figur 1 ersichtlich ist, ist die Dicke des Fasergewebes und der einhüllenden Siegelschichten 5, 5$'$ etwa in der Größenordnung der Dicke einer einzelnen Kunststoffolie 4 bzw. 4$'$. Auf jeder Kunststoffolie 4, 4$'$ befindet sich zumindest auf einer Seite eine Siegelschicht 5 bzw. 5$'$ aus einem siegelfähigen Polymer. Die Dicke der auf den Kunststoffolien bzw. Trägerfolien 4, 4$'$ aufgebrachten Siegelschichten 5 bzw. 5$'$, bei denen es sich im allgemeinen um Heißsiegelschichten handelt, reicht aus, um die Verstärkungsschicht 3 allseitig einzubetten und einen guten Verbund in den Grenzschichten zwischen den Siegelschichten und dem Fasergewebe der Verstärkungsschicht herbeizuführen. Während des Preßvorganges unter Wärmeanwendung auf den Kunststoffolienstapel, in welchen die Verstärkungsschicht 3 aus Fasern oder Faserhalbzeugen eingelegt ist, geht das Polymer der Siegelschichten 5, 5′ in einen schmelzflüssigen Zustand über, so daß es von beiden Seiten her die offenen Querschnitte bzw. Poren der Verstärkungsschicht 3 ausfüllt und durch diese hindurchgreift, um so eine nicht mehr auf trennbare Verbundhaftung zwischen der Verstärkungsschicht 3 und der Polymermatrix 2 herzustellen. Die Siegelschichten 5, 5′ haben im allgemeinen Dicken im Bereich von 1 μm. In Figur 1 sind die Kunststoffolien mit ihren Siegelschichten, die oberhalb der Verstärkungsschicht 3 liegen, durch Bezugszahlen ohne Strich und die entsprechenden Kunststoffolien mit den zugehörigen Siegelschichten, die unterhalb der Verstärkungsschicht 3 sich befinden, durch Bezugszahlen mit Strich gekennzeichnet.

Jede der beiden, sich teilweise berührenden Siegelschichten 5, 5′, die unmittelbar an die Verstärkungsschicht 3 in Figur 1 angrenzen, und die auf zueinander benachbarten Kunststoffolien aufgebracht sind, schließen die Verstärkungsschicht 3 entlang ihrer Oberflächenstruktur ein.

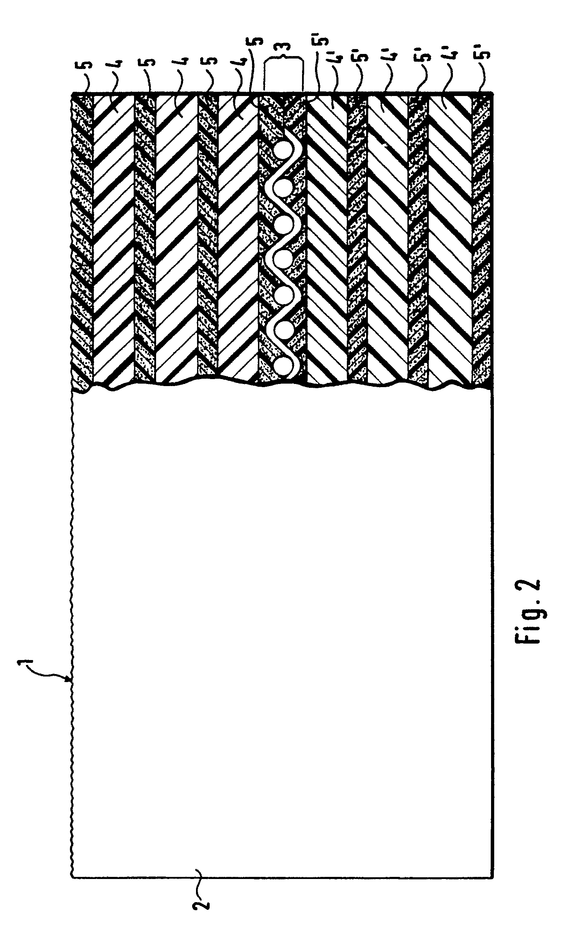

Figur 2 zeigt eine zweite Ausführungsform eines Verbundkörpers 1, der ähnlich dem Verbundkörper nach Figur 1 aufgebaut ist. Die Deckfläche einschließlich der obersten Siegelschicht 5 dieses Verbundkörpers 1 sind, wie in der Zeichnung angedeutet, reliefartig strukturiert, während die Grundfläche des Verbundkörpers 1 glatt ausgebildet ist. Es liegt auf der Hand, daß sowohl Deck- als auch Grundfläche jeweils glatt oder reliefartig strukturiert sein können. Die Verstärkungsschicht 3 bzw. das hierfür verwendete Fasergewebe besitzt eine größere Dicke als die Verstärkungsschicht nach Figur 1. Daraus bedingen sich zwangsläufig dickere Heißsiegelschichten 5, 5′ auf den beiden, die jeweiligen Grenzschichten zu der Verstärkungsschicht 3 bildenden Kunststoffolien bzw. Trägerfolien 4, 4′. Die beiden Kunststoffolien 4, 4′, die jeweils die Grenzschichten zu der Verstärkungsschicht 3 bilden, unterscheiden sich gegenüber den sonstigen Kunststoffolien 4, 4′ des Verbundkörpers 1 bzw. des Stapels aus Kunststoffolien nur dadurch, daß ihre mit dem Fasergewebe der Verstärkungsschicht 3 in direktem Kontakt stehenden Siegelschichten 5, 5′ eine wesentlich größere Schichtdicke als ihre Siegelschichten 5, 5′ aufweisen, die von der Verstärkungsschicht 3 abgewandt sind.

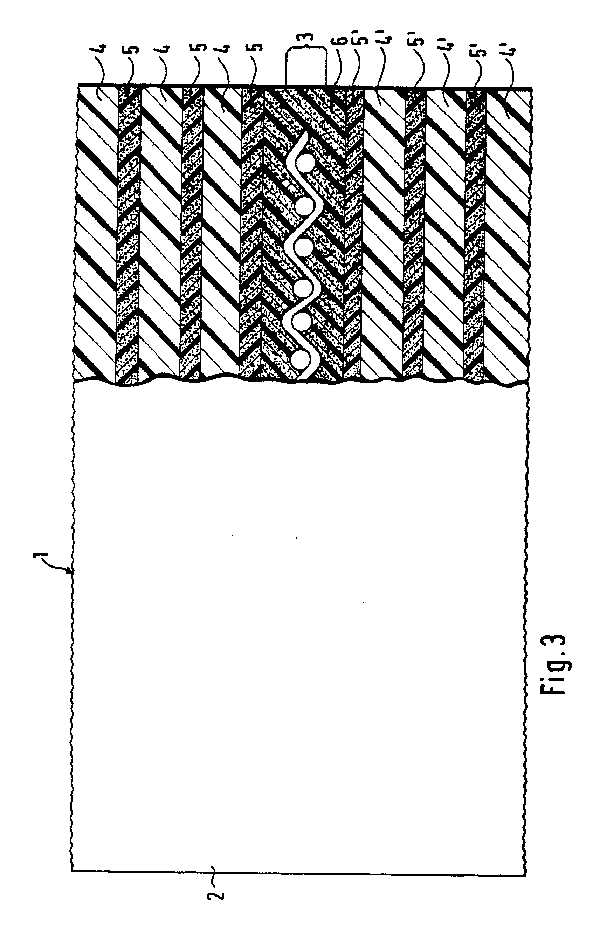

Bei einer dritten Ausführungsform des Verbundkörpers 1, wie er in Figur 3 gezeigt ist, ist eine sehr dicke, im mm-Bereich liegende Verstärkungsschicht 3 eingebaut. Hierzu ist das Fasergewebe der Verstärkungsschicht 3 in eine dicke Heißsiegelschicht in Form einer selbsttragenden Siegelschichtfolie 6 eingebracht, die aus demselben Polymerwerkstoff wie die Siegelschichten 5, 5′ der Kunststoffolien 4, 4′ des Verbundkörpers 1 besteht. Die Dicke der Siegelschichtfolie 6 ist annähernd gleich der doppelten Dicke der Verstärkungsschicht 3. Die Masse der Siegelschichtfolie 6 muß ausreichen, um beim Preßvorgang die offenen Querschnitte bzw. Poren des Fasergewebes der Verstärkungsschicht 3 auszufüllen und die Verbundhaftung mit den angrenzenden Siegelschichten 5, 5′ herzustellen. Die Deck- und die Grundfläche des Verbundkörpers 1 bilden jeweils strukturierte Kunststoffolien 4 bzw. 4′.

Die Verstärkungsschicht 3 kann bei Bedarf auch zwischen mehreren, beidseitig beschichteten Siegelschichtfolien 6 eingebettet sein, falls es die Dicke der Verstärkungsschicht 3 erfordert. Bei den Siegelschichtfolien 6 handelt es sich im allgemeinen um nicht verstreckte, amorphe, zäh-elastische Polymerschichten, die infolge ihrer zäh-elastischen Eigenschaften durch ihre Einlagerung in den Verbundkörper 1 zu einer erheblichen Erhöhung seiner Bruchfestigkeit beitragen.

Die selbsttragende Siegelschichtfolie 6 besteht aus dem gleichen Polymerwerkstoff wie die Siegelschichten 5, 5′ der Kunststoff- bzw. Trägerfolien 4, 4′, jedoch ist es genauso möglich, daß die Siegelschichtfolie 6 aus einem anderen Polymerwerkstoff als die Siegelschichten 5, 5′ geformt ist.

Die Siegelschichtfolie 6 wird entweder als Einzelfolie beim Aufeinanderschichten des Folienstapels eingelegt, oder als Heißsiegelschichtfolie 6, die bereits von Fasern verstärkt ist, in den Stapel eingebracht. Es bildet dann die Verstärkungsschicht 3 eine Faserschicht, die in der selbsttragenden Siegel- oder Haftvermittlungsschichtfolie 6 eingelagert ist. Der Verbund aus Faserschicht/Siegel- oder Haftvermittlungsschicht formt dann eine separate Schichtkomponente, die in den Folienstapel des Verbundkörpers 1 eingelegt wird. Die faserverstärkte Siegelschichtfolie 6 wird beispielsweise in der Weise erhalten, daß das Faserverstärkungsmaterial zwischen zwei Heißsiegelschichtbahnen eingeschossen wird und dieser dreilagige Verbund durch eine Doppel bandpresse bewegt wird, in der unter Druck und Temperatur die aufschmelzenden Siegelschichten das Fasergewebe durchtränken und einen Verbund aus vorimprägniertem Material bilden.

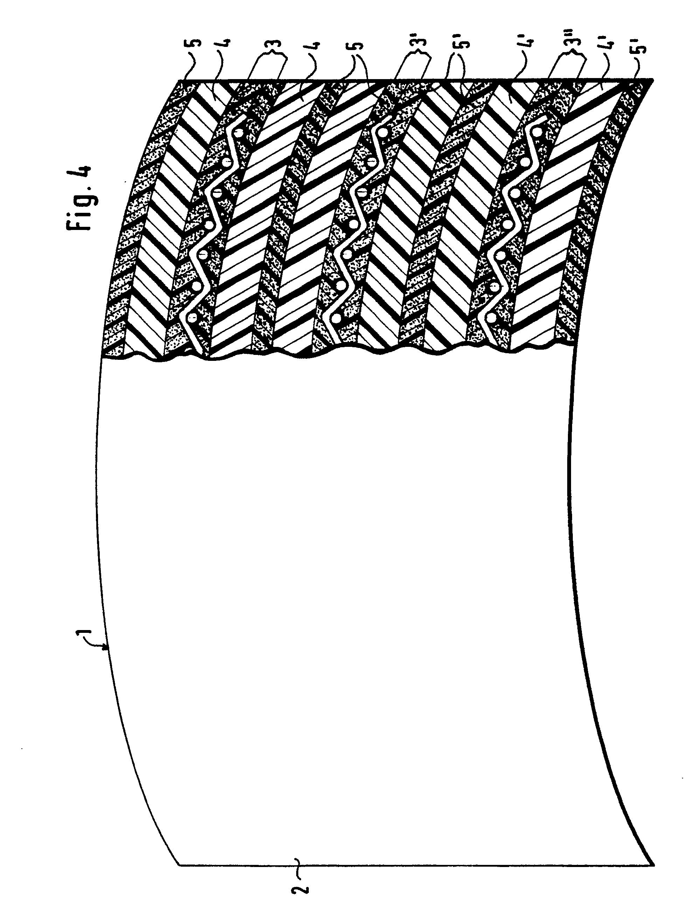

In Figur 4 ist eine schematische Schnittansicht einer vierten Ausführungsform eines gekrümmten, plattenförmigen Verbundkörpers 1 gezeigt, der mehrere Verstärkungsschichten 3, 3′, 3″ enthält. Die Verstärkungsschichten 3, 3′, 3″ weisen untereinander entweder gleiche oder unterschiedliche Abstände auf, wobei noch zusätzlich die Orientierungen der Materialien der Verstärkungsschichten gleich oder unterschiedlich sein können. Die Deck- und die Grundfläche des Verbundkörpers können beide glatt, beide reliefartig strukturiert sein, ebenso ist es möglich, daß eine der beiden Flächen glatt und die andere reliefartig strukturiert ist. In weiterer Ausgestaltung dieser Ausführungsform kann zumindest eine der Verstärkungsschichten eine der Außenflächen des Verbundkörpers bilden. Der Verbundkörper ist in seiner Formgebung nicht auf eine gekrümmte Platte beschränkt, sondern kann eine beliebige, nicht ebene Raumform aufweisen.

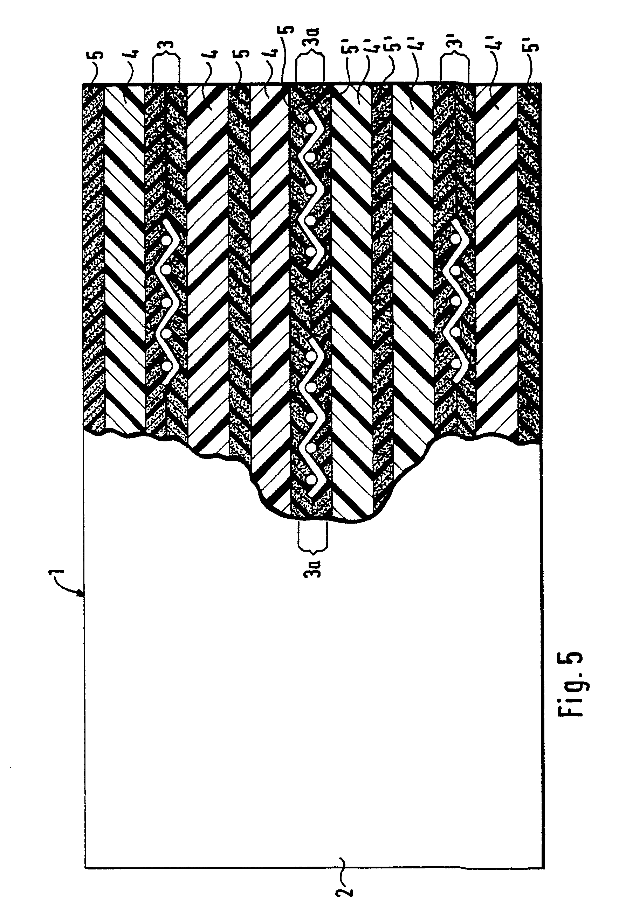

Figur 5 zeigt eine gegenüber Figur 4 geringfügig abgewandelte fünfte Ausführungsform eines ebenen, plattenförmigen Verbundkörpers 1 mit mehreren Verstärkungsschichten. Zwei Verstärkungsschichten 3 und 3′ erstrekken sich jeweils über zwei Teilflächen des Verbundkörpers 1, während eine weitere Verstärkungsschicht aus mehreren Teilflächenschichten 3a besteht, die mit Abstand zueinander in der gleichen Ebene in dem Verbundkörper 1 eingebettet sind. Die zwei Teilflächen der Verstärkungsschichten 3, 3′ sind z.B. symmetrisch zur Mitte des Verbundkörpers 1 angeordnet. Die Teilflächenschichten 3a sind in der Mittenebene des Verbundkörpers angeordnet, können aber auch in einer davon entfernten Ebene eingebettet sein.

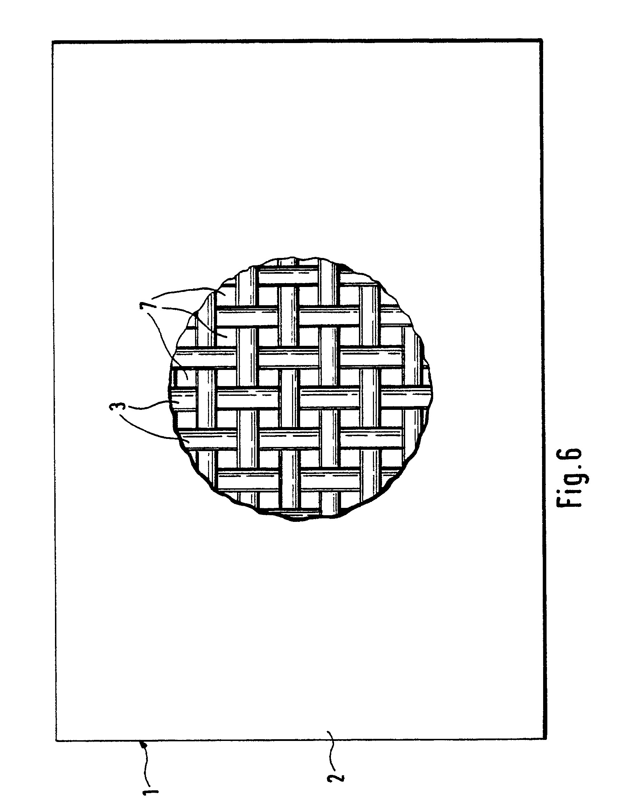

Eine Draufsicht auf eine einzelne Verstärkungsschicht 3, die aus einem Fasergewebe besteht, zeigt Figur 6. In dieser Draufsicht auf einen Ausschnitt sind die offenen Querschnitte bzw. Poren 7 des Fasergewebes deutlich erkennbar.

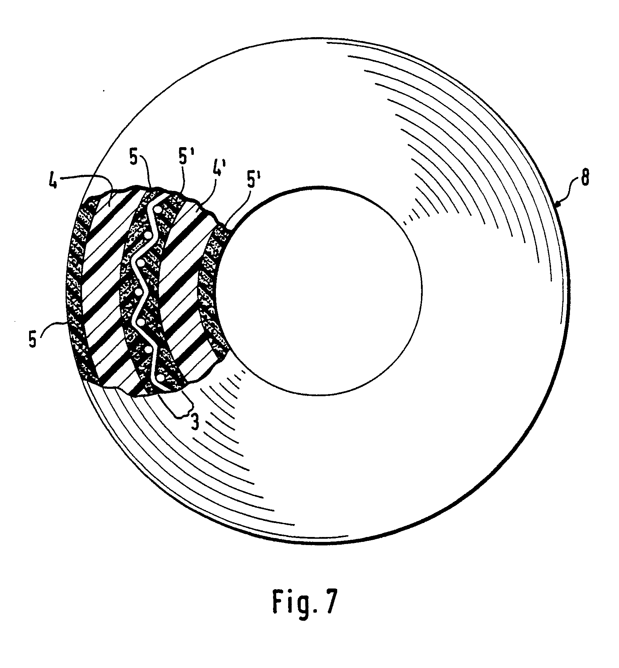

In Figur 7 ist ein Schnitt durch einen rohrförmigen Verbundkörper 8 nach der Erfindung dargestellt. Dieser rohrförmige Verbundkörper wird durch lagenweises Aufwickeln biaxial verstreckter, thermoplastischer, koextrudierter Kunststoffolien 4, 4′, die mit Siegelschichten 5 bzw. 5′ ausgerüstet sind, auf einen Wickeldorn erhalten, wobei beim Wickeln der Folienlagen mischen diesen Faserfilamente, Gelege, Gewebe, Gewirke, Gestricke oder Vliese als Verstärkungsschichten mit eingeschossen werden. Derartige faserverstärkte rohrförmige Verbundkörper 8 sind biegesteife und hochfeste Konstruktionselemente im Gerüst- und Hochbau. Mit elektrisch leitfähigen Faserschichten armierte rohrförmige Verbundkörper 8 können als beheizte Transportsysteme zum Fördern kälteempfindlicher Flüssigkeiten, wie beispielsweise Erdöl, eingesetzt werden.

Wie schon erwähnt wurde, handelt es sich bei den Kunststoffolien der Verbundkörper 1 bzw. 8 um Folien aus thermoplastischen Kunststoffen aus der Gruppe der Polyester und der Polyolefine, wobei jede einzelne Kunststoffolie mit mindestens einer Heißsiegelschicht 5 bzw. 5′ ausgerüstet ist. Zu der Gruppe der Polyester gehören Polyester-Homo- und -Copolymere, Gemische verschiedener Polyester sowie Abmischungen von Polyestern mit anderen Polymeren. Insbesondere sind darunter Polyethylenterephthalat, Polyolefin, wie Polypropylen, Polyethylen, Polystyrol, Polyamid, Polyvinylacetat zu verstehen. Neben Copolymeren sind auch Terpolymere oder Mischungen von diesen als Material für die Kunststoffolien vorgesehen. Als Polyolefine werden insbesondere Propylen-Homopolymere oder Copolymere eingesetzt, wobei die letzteren zum überwiegenden Teil aus Propyleneinheiten zusammengesetzt sind.

Die Kunststoffolien 4, 4′ besitzen im allgemeinen eine Dicke im Bereich von 10 bis 300 μm, insbesondere von 40 bis 200 μm.

Die Dicke der Heißsiegelschichten 5, 5′ die ein- oder beidseitig auf der Kunststoffolie bzw. der Trägerfolie aufgebracht sind, überschreitet üblicherweise 10 % der Dicke der Kunststoffolie nicht und liegt im allgemeinen im Bereich von 0,5 bis 5 μm. Diese Siegelschichten 5, 5′ bestehen u.a. aus statistischen Co- oder Terpolymeren von α-Olefinen mit 2, 3 und/oder 4 C-Atomen, Copolyestern mit Ethylenterephthalat- und Isophthalateinheiten, Ethylenvinylacetat-Copolymeren, Acrylat-Copolymeren, Copolyamiden, Polyurethanen, Polyvinylbutyral.

Für die Verstärkungsschichten des Verbundkörpers werden Textil-, Glas-, Kohlenstoff-, Aramidfasern oder Fasern aus flüssigkristallinen Polymeren verwendet bzw. Flächengebilde aus den vorgenannten Fasern in Gestalt von Gelegen, Geweben, Gewirken, Gestricken oder Vliesen. Ebenso kommen auch Verstärkungsschichten aus Kombinationen dieser Fasern bzw. Flächengebilden aus diesen Fasern in Betracht. Die Verstärkungsschichten eines Verbundkörpers können aus gleichen oder unterschiedlichen Materialien bestehen.

Zur besseren Einbindung in die Polymermatrix 2 des Verbundkörpers und zur Steigerung der interlaminaren Scherfestigkeit können die Fasern bzw. Flächengebilde aus den Fasern oberflächenpräpariert werden. Diese Oberflächenpräparation verbessert neben der Scherfestigkeit insbesondere die Haftung der Verstärkungsschicht in der Polymermatrix. Beispielsweise ist eine Polyamidimprägnierung einer Verstärkungsschicht, die aus Aramidfasern besteht, durchführbar, indem die Verstärkungsschicht vor ihrem Einlagern in die Polymermatrix durch eine Polyamidlösung hindurchgezogen wird. Falls es gewünscht ist, daß der Verbundkörper elektrische Leitfähigkeit besitzt, werden metallisierte Fasern oder Faserhalbzeuge als Verstärkungsschichten eingesetzt.

Obgleich dies nicht dargestellt ist, ist es auch möglich, anstelle von miteinander verbundenen Fasern bzw. Flächengebilden aus entsprechenden Fasern Einzelfäden in die Polymermatrix in flächenhafter Anordnung und entsprechender Dichte einzubetten.

Die Herstellung der plattenförmigen Verbundkörper erfolgt durch Verpressen eines Folienstapels aus übereinander geschichteten, biaxial und/oder monoaxial verstreckten, thermoplastischen, koextrudierten Kunststofffolien. Vor dem Verpressen wird in den Folienstapel an beliebiger Stelle zumindest eine Verstärkungsschicht in Form von Faserfilamenten, eines Geleges, Gewebes, Gewirkes, Gestrickes oder Vlieses so eingelegt, daß sie innerhalb der Begrenzungskanten der Zuschnitte der Kunststofolien liegt. Ist nur eine einzige Verstärkungsschicht vorgesehen, so wird diese im allgemeinen mittig in dem Folienstapel angeordnet. Werden mehrere Verstärkungsschichten in den Folienstapel eingebracht, so kann zumindest eine dieser Verstärkungsschichten an einer Außenfläche des Folienstapels sich befinden. Die Abstände der einzelnen Verstärkungsschichten untereinander können gleichgroß oder auch unterschiedlich groß sein. Die thermische Verpressung des Folienstapels erfolgt zwischen zwei Preßmatrizen, die wahlweise glatte und/oder strukturierte Oberflächen besitzen. Die in den Schmelzzustand überführten Siegelschichten auf den Kunststofffolien hüllen die Verstärkungsschicht(en) allseitig ein und füllen deren frei Querschnitte bzw. Poren so aus, daß nach dem Abkühlen des Folienstapels ein untrennbarer Verbundkörper aus Kunststofolien, Siegelschichten und Verstärkungsschicht(en) in der Polymermatrix vorliegt.

Die durch das Einbetten von Faserschichten verstärkten Verbundkörper zeichnen sich durch hervorragende Bruchfestigkeit aus und sind insbesondere zur Fertigung von mechanisch hochbeanspruchten Bauteilen verwendbar.

## Ansprüche

1. Dimensionsstabiler Verbundkörper in Gestalt einer ebenen Platte, eines Rohres oder einer nicht ebenen Raumform, aus einer Anzahl übereinander geschichteter, miteinander verpreßter, thermoplastischer Kunststofffolien, die zumindest einseitig mit einer Siegelschicht beschichtet sind, deren Schmelzpunkt niedriger als der Schmelzpunkt jeder der Kunststofolien ist und die mono- und/oder biaxial verstreckt sind, dadurch gekennzeichnet, daß zumindest eine mit offenen Querschnitten (7) ausgestattete Verstärkungsschicht (3) in dem Verbundkörper (1) eingebettet und allseitig von einem siegelfähigen Polymer eingeschlossen ist und daß das Polymer die offenen Querschnitte der Verstärkungsschicht (3) von beiden Seiten her ausfüllt und einen nicht trennbaren Verbund mit der Verstärkungsschicht (3) bildet.

2. Dimensionsstabiler Verbundkörper nach Anspruch 1, dadurch gekennzeichnet, daß je eine Siegelschicht (5; 5′) aus dem siegelfähigen Polymer an die Verstärkungsschicht (3) an jeder Seite angrenzt, daß die offenen Querschnitte (7) der Verstärkungsschicht (3) Poren sind und daß das Polymer der Siegelschichten (5, 5′) von beiden Seiten her die Poren der Verstärkungsschicht (3) ausfüllt und untrennbar miteinander und mit der Verstärkungsschicht (3) verbunden ist.

3. Dimensionsstabiler Verbundkörper nach Anspruch 1, dadurch gekennzeichnet, daß die einzelne Verstärkungsschicht (3) mittig in dem Verbundkörper (1) eingebettet ist und daß jede der beiden, sich teilweise berührenden Siegelschichten (5, 5′), die auf zueinander benachbarten Kunststofolien (4, 4′) aufgebracht sind, die Verstärkungsschicht (3) über ihre Oberflächenstruktur umschließt.

4. Dimensionsstabiler Verbundkörper nach Anspruch 1 dadurch gekennzeichnet, daß die Verstärkungsschicht (3) in eine selbsttragende Siegelschichtfolie (6) aus demselben Polymerwerkstoff wie die Siegelschichten (5, 5′) der Kunststofolien (4, 4′) eingebettet ist und daß die Dicke der Siegelschichtfolie annähernd gleich der doppelten Dicke der Verstärkungsschicht (3) ist.

5. Dimensionsstabiler Verbundkörper nach Anspruch 1, dadurch gekennzeichnet, daß die Verstärkungsschicht (3) in eine separate, selbsttragende Siegel- oder Haftvermittlerschichtfolie (6), bestehend aus einem anderen Polymerwerkstoff als die Siegelschichten (5, 5′) der Kunststofolien (4, 4′), eingebettet ist.

6. Dimensionsstabiler Verbundkörper nach Anspruch 4 oder 5, dadurch gekennzeichnet, daß die Verstarkungsschicht (3) eine Faserschicht ist, die in eine selbsttragende Siegel- oder Haftvermittlerschichtfolie (6) eingelagert ist und daß der Verbund aus Faserschicht/ Siegel- oder Haftvermittlerschichtfolie (6) eine eigene Schichtkomponente des Verbundkörpers (1) bildet.

7. Dimensionsstabiler Verbundkörper nach den Ansprüchen 1 bis 6, dadurch gekennzeichnet, daß in den Verbundkörper zwei oder mehr Verstärkungsschichten (3, 3′...) in unterschiedlichen Abständen zueinander eingebaut sind, wobei die Orientierungen der Materialien der Verstärkungsschichten gleich oder unterschiedlich sind.

8. Dimensionsstabiler Verbundkörper nach Anspruch 7, dadurch gekennzeichnet, daß zumindest eine der Verstärkungsschichten eine der Außenflächen des Verbundkörpers (1) bildet.

9. Dimensionsstabiler Verbundkörper nach den Ansprüchen 1 bis 8, dadurch gekennzeichnet, daß die einzelne Verstärkungschicht (3) aus Textil-, Glas-, Kohlenstoff-, Aramidfasern oder Fasern aus flüssigkristallinen Polymeren besteht.

10. Dimensionsstabiler Verbundkörper nach den Ansprüchen 1 bis 9, dadurch gekennzeichnet, daß die Verstärkungsschichten (3, 3'...) aus Gelegen, Geweben, Gewirken, Gestricken oder Vliesen aus gleichen oder unterschiedlichen Materialien bestehen.

11. Dimensionsstabiler Verbundkörper nach den Ansprüchen 1 bis 10, dadurch gekennzeichnet, daß eine oder mehrere der Verstärkungsschichten (3, 3'...) aus metallisierten, elektrisch leitfähigen Fasern besteht.

12. Dimensionsstabiler Verbundkörper nach den Ansprüchen 1 bis 11, dadurch gekennzeichnet, daß die Verstärkungsschichten Oberflächenpräparationen aufweisen, die die Verbundhaftung mit dem siegelfähigen Polymer des Verbundkörpers (1) erhöhen.

13. Dimensionsstabiler Verbundkörper nach den Ansprüchen 1 bis 12, dadurch gekennzeicnet, daß eine Verstärkungsschicht aus mehreren Teilflächenschichten (3a) besteht, die nebeneinander mit Abstand in der gleichen Ebene in den Verbundkörper eingebettet sind.

14. Dimensionsstabiler Verbundkörper nach den Ansprüchen 1 bis 13, dadurch gekennzeichnet, daß die Oberflächen des Verbundkörpers (1) glatt und/oder reliefartig strukturiert sind.

15. Dimensionsstabiler Verbundkörper nach den Ansprüchen 1 bis 14, dadurch gekennzeichnet, daß die Kunststoffe der thermoplastischen Kunststoffolien des Verbundkörpers (1) aus der Gruppe Polyester, insbesondere Polyethylenterephthalat, Polyolefin, wie Polypropylen, Polyethylen, Polystyrol, Polyamid, Polyvinylacetat oder Copolymeren oder Terpolymeren oder Mischungen von diesen ausgewählt sind.

16. Dimensionsstabiler Verbundkörper nach den Ansprüchen 1 bis 15, dadurch gekennzeichnet, daß die einzelnen Lagen der Kunststoffolien des Verbundkörpers (1) im Dickenbereich von 10 bis 300 $\mu$m, insbesondere von 40 bis 200 $\mu$m, liegen.

17. Dimensionsstabiler Verbundkörper nach den Ansprüchen 1 bis 16, dadurch gekennzeichnet, daß die Siegelschichten aus statistischen Co- oder Terpolymeren von $\alpha$-Olefinen mit 2, 3 und/oder 4 C-Atomen, Copolyestern mit Ethylenterephthalat- und Isophthalateinheiten, Ethylenvinylacetat-Copolymeren, Acrylat-Copolymeren, Copolyamiden, Polyurethanen, Polyvinylbutyral bestehen.

18. Verfahren zur Herstellung eines Verbundkörpers nach einem oder mehreren der Ansprüche 1 bis 17 durch Verpressen eines Folienstapels aus übereinander geschichteten, biaxial und/oder monoaxial verstreckten, thermoplastischen, koextrudierten Kunststoffolien, dadurch gekennzeichnet, daß vor dem Verpressen in den Folienstapel an beliebiger Stelle zumindest eine Verstärkungsschicht in Form von Faserfilamenten, eines Geleges, Gewebes, Gewirkes, Gestrickes oder Vlieses so eingelegt wird, daß sie innerhalb der Begrenzungskanten der Zuschnitte der Kunststoffolien liegt, daß anschließend eine thermische Verpessung zwischen zwei Preßmatrizen, die wahlweise glatte und/oder strukturierte Oberflächen aufweisen, vorgenommen wird, und daß die in den Schmelzezustand überführten Siegelschichten auf den Kunststoffolien sowohl die Verstärkungsschicht allseitig einhüllen als auch deren freie Querschnitte bzw. Poren ausfüllen, so daß nach dem Abkühlen des Folienstapels ein untrennbarer Verbundkörper aus Kunststofffolien, Siegelschichten und Verstärkerschicht vorliegt.

19. Verfahren zur Herstellung eines zylindrischen bzw. rohrförmigen Verbundkörpers nach einem oder mehreren der Ansprüche 1 bis 17 durch lagenweises Aufwickeln biaxial verstreckter, thermoplastischer, koextrudierter Kunststoffolien auf einen Wickeldorn und thermisches Schrumpfen des Wikkels bei der Schmelztemperatur von auf den Kunststoffolien aufgebrachten Heißsiegelschichten, dadurch gekennzeichnet, daß beim Wickeln der Folienlagen zwischen diesen Faserfilamente, Gelege, Gewebe, Gewirke, Gestricke oder Vliese als Verstärkungsschichten eingeschossen werden.

Fig.1

EP 0 418 772 A2

Fig. 2

Fig. 3

EP 0 418 772 A2

Fig. 4

Fig. 5

Fig. 6

EP 0 418 772 A2

Fig. 7